# EUROPEAN PATENT APPLICATION

(11) **EP 1 384 626 A1**
(43) Date of publication of application: **28.01.2004**
(21) Application number: 01273964.5
(22) Date of filing: 27.12.2001
(51) Int. Cl.: B60R 11/02, B60R 16/02, B60R 1/04, B60R 1/12

(54) **WIRELESS COMMUNICATION REPEATER-BUILT-IN VEHICLE-USE MIRROR DEVICE**

(30) Priority: 08.03.2001 JP 2001064703
(71) Applicant: Murakami Corporation, Shizuoka-shi, Shizuoka, 422-8569 (JP)
(72) Inventor: SATO, Hidenori, c/o Fujiedajigyosho, Fujieda-shi, Shizuoka 426-8601 (JP); KOBAYASHI, Akiyoshi, c/o Fujiedajigyosho, Fujieda-shi, Shizuoka 426-8601 (JP)
(74) Representative: Strehl Schübel-Hopf & Partner
(86) International application number: PCT/JP2001/011566
(87) International publication number: WO 2002/072389

(57) **Abstract**

In the present invention, for example, wireless communication repeater station 10 comprising receiving portion 12 which receives a specific electric wave signal from an outside or inside of an automobile, amplifying portion 13 which amplifies the signal from receiving portion 12, and transmission portion 14, which transmits the signal amplified in amplifying portion 13 is accommodated within an interior mirror provided on an automobile, and wireless communication repeater station 10 forms a part of network connecting to electronic apparatuses within the automobile. This makes it possible to perform various information communications inside and outside of the automobile in a smooth manner. Also, this makes it possible to alternative communication even through a weak electric wave.

## Description

### TECHNICAL FIELD

The present invention relates to an automobile mirror device having a wireless communication repeater station accommodated therein, in which a wireless communication repeater station is provided within a mirror device.

### BACKGROUND ART

Due to an automobile being made electronically and becoming computerized, apparatuses utilizing wireless signals within the automobile have been increased. Particularly, the investigations have been made for intelligent transport system abbreviated as ITS. For example, Road/Automobile communication system, which performs communication between information master station and an automobile, and Automobile/Automobile communication system, which performs communication between automobiles, have been investigated for practical use.

In the field of a car navigation device, a system called VICS (vehicle Information and Communication System), which provides road traffic information at real time, has been developed and has been put into practice utilizing a technique such as a electric wave beacon, a light beacon, and FM multiplication.

In addition, an automatic toll collection system called ETC (Electronic Toll Collection System) has been studied, and an in-vehicle type automatic toll collection system has also been developed as disclosed in Japanese Patent Laid-Open No. 8-297758. In this case, the in-vehicle type automatic toll collection system only possesses a one-to-one alternative communication facility between the system and an ETC apparatus provided on a road and there is no system having a repeater function to any other devices.

From now on, it should be considered that networking of these techniques will increasingly progress, and electronic apparatuses provided on or carried on an automobile will be utilized as a part of network.

However, the cabin of the automobile has poor radio wave conditions due to noises generated from electronic apparatuses provided on and/or carried on the automobile and from the engine. Also, since the automobile body is made of a metal, the cabin can receive radio waves only with difficulty. Also, since power communication exceeding 10 mW is not allowed by Law of Wave, strong wave enough for having no influence of noises cannot be transmitted.

The present invention has been made for solving the problems associated with the prior art, and an object of the present invention is to make various information communications inside or outside of the automobile and to make it possible to perform alternative communication even through a slight wave.

### SUMMARY OF THE INVENTION

In order to attain the above object, an automobile mirror device having a repeater station accommodated therein according to the present invention is characterized in that a wireless communication repeater station, which has a function of relaying a wave signal to be transmitted from inside or outside of the automobile to the inside or outside of the automobile is accommodated within a mirror device provided on the automobile.

According to such a configuration, various types of information communication at the inside and the outside of the automobile can be performed in a smooth manner. Specifically, such a configuration makes it possible to perform the relaying of a wireless signal from the inside to the inside of the automobile, from the inside to the outside of the automobile, and from the outside to the inside of the automobile and, thus, performing information communication between the inside and outside of the automobile in a smooth manner.

Also, the wireless communication repeater station according to the present invention is characterized in that a wireless communication repeater station at least comprising a receiver which receives a wave signal transmitted from the inside or outside of the automobile, an amplifier, which amplifies the wave signal received from the receiver as occasion demands, and a transmission portion, which transmits the signal amplified by the amplifier is accommodated within an interior of a mirror device provided on the automobile.

According to such a configuration, the simplest repeater station, which only comprises a receiver, an amplifier, and a transmission portion, and which only serves as a repeater can be realized. Alternatively, for example, the repeater station as a "Bluetooth" terminal specialized for a repeater station can be realized, which has a high performance, low cost, a small size, and lowered power consumption.

The wireless communication repeater station according to the present invention is characterized in that it is a part of the network within the automobile, which connects electronic apparatuses within the automobile.

According to such a configuration, various types of information communications at the inside and the outside of the automobile can be performed in a smooth manner. Apparatuses making up the network within the automobile can form a network within the automobile in a good manner only through a weak electric wave. The term "a part of the network" used herein means to include a repeater station making up the network, a terminal making up the network, parts for making up the network (for example, an adaptor to be connected to the network) , and the like.

The wireless communication repeater station according to the present invention is characterized in that it is a part of the network within the automobile, which connects electronic apparatuses within the automobile, and has a function of connecting the networks inside and outside of the automobile with each other.

In the present invention, by providing the wireless communication repeater station within the interior mirror, the communication with the outside of the automobile can be performed in a good manner, and various types of information communication at the inside and the outside of the automobile can be performed in a smooth manner.

Also, by providing the wireless communication repeater station within the interior mirror, there is little influence upon a noise and, thus, the communication with any other apparatus can be performed in a good manner. Furthermore, by providing the wireless communication repeater station within the interior mirror, the degree of freedom concerning the position for placing the any other apparatuses for the communication within the automobile and the degree of freedom concerning the place for setting an antenna. Also, this makes it possible to design the any other communication devices within the automobile.

In addition, according to the present invention, the electric wave may be a signal defined by short distance commemoration standard, and the mirror device may be one terminal for the network formed by the short distance commemoration standard. Here, in the case where a signal defined by the short distance commemoration standard (such as Bluetooth, Home RF, wireless LAN, and 5 GHz band) is used, there are merits that no license is required, that the repeater station can be simply configured, and any other merits.

Particularly, in the present invention, the electric wave signal is Bluetooth signal, and the mirror device is a Bluetooth terminal. Here, the "Bluetooth terminal" is operated according to Bluetooth communication standard, and makes up a Bluetooth communication network. For example, the wireless communication repeater station may have functions as the Bluetooth terminal. Specifically, the wireless communication device may be a Bluetooth terminal (Master) having control functions, and can realize one-to-many connection, while controlling any other Bluetooth terminals (Slaves). Also, there is a merit that a Bluetooth system module etc., which will be commercially available, is used to constitute a Bluetooth wireless commemoration repeater station at a low const with a small size.

The wireless communication repeater station according to the present invention is characterized by possessing a function of hands-free telephone.

Here, the interior mirror is an optimum position to accommodate the function of the hands-free telephone. It is noted that the wireless communication repeater station according to the present invention is a Bluetooth terminal, the function of hands-free telephone can easily be added.

### BRIEF DESCRIPTION OF THE DRAWINGS

FIG. 1 is a block diagram showing a brief inner configuration of the wireless communication repeater station accommodated within an interior mirror according to the first embodiment of the present invention.
FIG. 2 is a drawing showing the transferring of data when wireless communication is performed using the interior mirror according to the first embodiment.
FIG. 3 is a block diagram showing an inner configuration of the wireless communication repeater station accommodated within an interior mirror according to the second embodiment of the present invention.
FIG. 4 is a drawing showing the transferring of data when wireless communication is performed using the interior mirror according to the second embodiment.
FIG. 5 is a block diagram showing an inner configuration of the interior mirror according to the second embodiment into which a hands-free telephone is accommodated within the wireless communication repeater station.
FIG. 6 is a block diagram showing the configuration of the wireless communication repeater station according to the third embodiment.
FIG. 7 is a drawing showing the fourth embodiment wherein Bluetooth terminal speciallized for the wireless communication repeater station is accommodated within an interior mirror and an exterior mirror, respectively.
FIG. 8 is a block diagram showing a brief inner configuration of the wireless communication repeater station accommodated within an interior mirror according to the fifth embodiment of the present invention.

### BEST MODES FOR CARRYING OUT THE INVENTION

Embodiments of the present invention will now be described by referring to the drawings.

### First Embodiment

In this embodiment, an embodiment will be described where communication repeater station is placed within an interior mirror of an automobile, and the the repeater station accommodated within an interior mirror of the present invention is used as one terminal of Bluetooth™ (Trademark Pending: Telephone AB EM /Ericsson Inc.).

Here, Bluetooth is a short distance commemoration standard for connecting various digital devices such as a cellular phone, a personal computer, a digital camera, a game device, and the like in a cordless manner, and can realize a distribution/coordination network environments that a plurality of devices can be processed in a distributed manner.

The carrier frequency used utilizes Bluetooth is a frequency in which no license is required when a user utilizes it. This carrier frequency is 2.4 GHz, which is within ISM (Industrial Scientific Medical) band, and which can be in substantially worldwide. In Bluetooth, a spectrum dispersion technique in a frequency-hopping manner (number of hopping: max. 1600 per second) is used to prevent any interference to other wireless communication. Because Bluetooth can be realized using one chip of CMOS-LSI, it has a merit that it can be produced at a low cost.

In Bluetooth, for example, a network connected by Bluetooth, called WPAN (Wireless Personal Area Network) is formed within an automobile. In Bluetooth built-in devices, seven types of mode are set depending upon the conditions of joining WPAN (Bluetooth version 1.0A). The device is shifted from "Standby Mode", which has not yet established any link, via "Inquiry Mode (no address acquired) ", which is a connection stage, "Page Mode (address acquired)", to an "Active Mode", which is under connection, and after the connection is completed, it is shifted to "Park Mode", "Hold Mode", and " Sniff Mode", which are waiting conditions in a low power consumption. By finely dividing the modes, power consumption is reduced.

At the present, with regard to the transmission output, three classes, i.e., Class 1 at + 20 dDM; Class 2 at + 4dBm; and Class 3 at 0 dBm, are provided. The maximum transmission distance at Class 1, which is the largest output, is 100 m, and that at Class 3 is 10 m. In Class 1, an external power amplifier circuit is required.

Bluetooth is not a one-to-one network technique instead of using cable, but is a simple wireless network system, which makes it possible to one-to-many connection. In order to systematically perform communications through a plurality of terminals, a device or a function for controlling them is required. Bluetooth is a technique where no system apparatus corresponding to a base station is provided, and terminals are simply networked with each other. In this case, control functions are imparted to one terminal amongst the group of the terminals concerning the communication to be dealt. The Bluetooth terminal serving as the control functions is referred to as "Master", and the remaining terminals are referred to as "Slaves". The relation between the master and the slave is just like the relation between the saver and the client in a computer network. Specifically, the master is a terminal corresponding to the saver, and the slave is a terminal corresponding to the client. The network in which these communication terminals are under communication conditions is called "Piconet". In the Piconet, there is always only one master, and the communication is carried out while controlling at least one slave by the master. All the packets are transmitted and received between the master and the slave, and it is impossible to perform the direct communication between the slaves. It is possible to connect different Piconets, which exist in adjacent to each other, with each other via respective master (s) and/or slaves. In this case, each of Piconets is characterized by the address and clock of Bluetooth concerning the respective master. Since the characteristics are different when the master is different, the existing Piconet can be connected to the master or the slave of'another Piconet in adjacent to this.

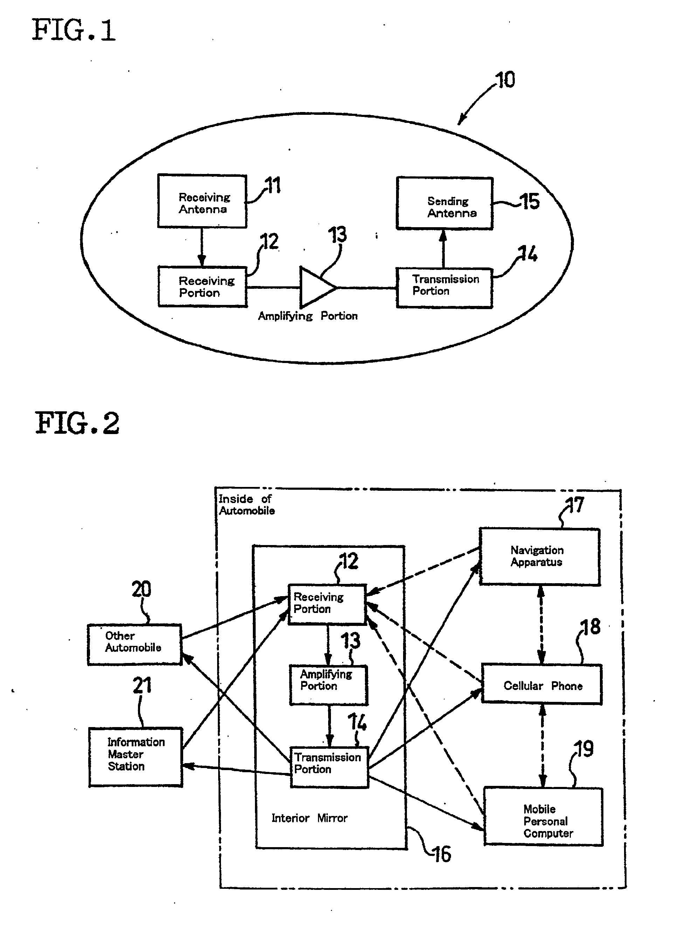

FIG. 1 is a block diagram showing a brief inner configuration of the wireless communication repeater station 10 accommodated within an interior mirror according to this embodiment, and FIG. 2 is a drawing showing the transferring of data when wireless communication is performed using the interior mirror of this embodiment. As shown in FIG. 1, the wireless communication repeater station 10 accommodated within an interior mirror is composed of a receiving antenna 11 and a sending antenna 15, which receive and send wave signals of Bluetooth, a receiving portion 12, an amplifying portion 13, and a transmission portion 14.

The wave signal transmitted from any other wireless communication device is caught by receiving antenna 11, and then received by receiving portion 12. Subsequently, the signal received by receiving portion 13 is amplified in amplifying portion 13, then sent to transmission portion 14, and then transmitted through sending antenna 15. Amplifying portion 13 amplifies a signal if it is weak; and in some cases, it does not amplify a signal if it is strong enough.

Subsequently, referring to FIG. 2, the operation of the wireless communication utilizing this interior mirror 16 will be briefly described. In this figure, the arrow shown as a real line represents a strong electric wave, and the arrow shown as a broken line represents a weak electric wave. The devices forming the network within the automobile can be made up a network using weak electric waves. Also, since interior mirror 16 is relatively far from any other devices within the automobile, it has little influence upon a noise. In addition, since interior mirror 16 is positioned at a substantially center portion of the cabin, which is a portion where almost all of the cabin can be looked over, the setting of the electric wave repeater station makes it possible to perform the communication to any other apparatus in a stable manner.

In interior mirror 16, which also performs a communication with the outside of the automobile, it is configured to transmit a strong electric wave from transmission portion 14.

For example, when Automobile/Automobile communication to another automobile 20 is performed, e.g., for leading an emergency automobile to a route, or when Road/Automobile communication is performed in order to obtain road traffic information from information master station 21 provided on the side of the road, since the communication distance is changed according to the movement of the automobile, the communication must be performed with a strong electric wave. In this case, since the interior mirror is disposed at a portion which can widely viewed from the outside of the automobile, it can well transmit the electric waves from the outside of the automobile to the apparatus within the automobile.

By using the repeater station accommodated within interior mirror 16 and by utilizing Bluetooth network, the communication among the inside and outside of the automobile can be well performed. For example, road traffic information such as information concerning closing the road due to construction or information concerning traffic congestion from information master station 21 provided on the side of the road can be relayed by the repeater station accommodated within interior mirror 16, and can be displayed on navigation apparatus 17 set on the interior of the automobile. Also, when one group acts with a plurality of automobiles, by utilizing a mobile personal computer 19, etc., the present location of each automobile can be confirmed with each other through navigation apparatus 17.

For example, audio data, image data or music data can be received by a cellular phone having Bluetooth, transmitted to the interior of the automobile as Bluetooth data, relayed by the repeater station accommodated within interior mirror 16, and then received by an AV (audio visual) device within the automobile to play the audio data, image data, or music data by using a high quality AV device.

Also, for example, by relaying a call to cellular phone 18 by the repeater station accommodated within interior mirror 16 and by possessing a hands-free telephone function accommodated within interior mirror 16, the same environment as that of hands-free telephone can be created with ease. Interior mirror 16 is provided at a portion near the driver's face, it is easy for interior mirror 16 to collect the voice of the driver and, thus, the interior mirror 16 is suitable for accommodating the functions of hands-free telephone.

As described above, by having the wireless communication repeater station accommodated within interior mirror 16, since interior mirror 16 is relatively far from any other electronic apparatuses within the automobile, there is little influence of a noise. Also, since the wireless communication repeater station is provided at a substantially center portion of the cabin, which is a portion where almost all of the cabin can be looked over, the setting of the electric wave repeater station makes it possible to perform the communication to any other device in a stable manner. This increases a degree of freedom concerning the position for placing the any other apparatuses for the communication within the automobile and a degree of freedom concerning the place for setting an antenna. Also, this makes it possible to design the any other communication apparatuses within the automobile.

Furthermore, since the interior mirror 16 is disposed at a portion which can widely viewed from the outside of the automobile, it can well transmit the electric waves from the outside of the automobile to the apparatus within the automobile.

While the case where the wireless communication repeater station is provided within the interior mirror of the automobile has been described in this embodiment, the wireless communication repeater station may be provided within an exterior mirror outside of the automobile. In the latter case, the sending and receiving antenna (S/R antenna) is provided at the position projecting from the automobile and, thus, the communication with the outside of the automobile can be performed in a better manner.

Also, while the case where the repeater station built-in mirror is used as one terminal of Bluetooth has been described, it should be understood that any other standard may be used, and that the present invention is not restricted thereto.

The fact that the wireless communication repeater station in the above-mentioned embodiment 1 is one terminal of Bluetooth has a meaning that the wireless communication repeater station has functions as a Bluetooth terminal, and for example, the wireless communication repeater station may be a Bluetooth terminal (Master) having control functions, and can realize one-to-many connection, while controlling any other Bluetooth terminals (Slaves). In this case, all of the communications are performed by transmitting and receiving data between the master and the slave, and usually the direct communication between the slaves is not performed. The wireless communication repeater station (Bluetooth terminal specialized for wireless communication) having such functions can be realized, for example, by using Bluetooth hardware which will be described later on, - i.e. , a transceiver and a Bluetooth tip set composed of a base tip set and accompanying software and memory, or a Bluetooth system module in which they are one-tipped -, and by storing a software for realizing the relaying of the wireless communication in, for example, CPU or memory in the base tip set.

In Embodiment 1, as shown in FIG. 2, it may be configured that the electric wave transmitted to the electronic apparatuses in the automobile is set at a weak electric wave. In this case, for example, since the above-mentioned Bluetooth hardware (for example Class 1) has a function that the transmission power between the mutual terminals is adaptably controlled while monitoring RSSI (Received Signal Strength Indicator) and, thus, the electric wave to be transmitted to the electronic apparatuses within the automobile can be automatically controlled so as to be weak. Also, through the function of controlling the transmission- power, a strong electric wave can be automatically transmitted to the electronic apparatuses outside of the automobile or such. The Bluetooth terminal specialized for the wireless communication repeater station accommodated within the interior mirror, which is the master of PICONET, can identify PICONET outside of the automobile and connected to the PICONET outside of the automobile, for example, communication between PICONET inside of the automobile and PICONET outside of the automobile.

In Embodiment 1, even in the case where the wireless communication repeater station only has a function as a repeater station that it receives a Bluetooth signal, and optionally amplifies it, and transmits it as a Bluetooth signal, the repeater station can relay the Bluetooth signal (such an embodiment including the present invention). However, such a repeater station only for a repeater station has no function of the Bluetooth terminal and cannot form PICONET within the automobile. Specifically, even if the wireless communication repeater station is merely a repeater station, it is usually assumed as a part of network, but since Bluetooth defines PICONET as to be the network between Bluetooth terminals, in such a case, the mere repeater station not being Bluetooth terminal is not assumed as a part of the network in such a case. The mere repeater station as described above can easily be produced by using a Bluetooth transceiver as it is or simply modifying it.

### Embodiment 2

In Embodiment 2, an embodiment will be described in which a wireless repeater station intended to specially utilizing the relaying within the automobile is provided within the interior mirror of the automobile and in which the wireless repeater station is a wireless communication repeater station specialized for relaying a Bluetooth signal (Bluetooth terminal for a wireless communication repeater station).

Here, in the case where the repeater station is for a repeater station only within the automobile and is specialized for Bluetooth, for example, Class 3, in which the transmission output in Bluetooth is the lowest, can be used. Class 3 has the maximum transmission distance at 10 m, which is sufficient for transmitting signals within the automobile.

The interior mirror is positioned at a substantially center portion of the cabin, which is a portion where almost all of the cabin can be looked over, and the electric wave is easily transmitted over the entire portion of the cabin. Accordingly, the interior mirror is most suitable for the position of setting the repeater station specialized for the cabin. If the repeater station is provided on a portion other than the interior mirror, for example, provided on an upper portion of the front glass, the view becomes narrow and the appearance is not good.

Also, since the interior mirror is positioned at a substantially center portion of the cabin, which is a portion where almost all of the cabin can be looked over, and is relatively far from any other devices within the automobile, it has little influence upon a noise. Also, the interior mirror is far from the engine, it is difficult to catch the noise from the engine and, thus, it has little influence upon a noise. Consequently, the use of the repeater station within the interior mirror makes it possible to perform communication between prescribed electronic apparatuses within the automobile in a stable manner without any influence of a noise.

The Bluetooth terminal specialized for a wireless communication repeater station is inexpensive, has a small size, and can be accommodated within the interior mirror as described above, the standard equipment thereof can be realized, not restricted to a luxury car. Consequently, it can promote the popularization and utilization of the network within the automobile through Bluetooth. The Bluetooth terminal can be composed of a sending and receiving module comprising Bluetooth hardware, i.e., a transceiver and a Bluetooth tip set composed of a base tip set and accompanying software and memory, or a Bluetooth system module in which they are one-tipped, wherein a software for realizing the relaying of the wireless communication is stored, for example, in CPU or memory in the base tip set; an antenna, and a power source.

In the case where, for example, Class 3, in which the transmission output of the electric wave in Bluetooth is the lowest, is selected, it is not necessary to externally equip any power amplifier and, thus, the transmission portion can be made into a small size. In Bluetooth, since the transmission and receiving module can be realized, for example, by using one tipped CMOS-LSI, it can be produced with a low cost. Also, the use of CMOS makes it possible to be low power consumption. What is more, in Bluetooth, mode can be finely divided to further reduce power consumption. Since the module for transmitting and receiving Bluetooth can be realized by one tipped CMOS-LSI, a built-in space may be small. This makes it possible to accommodate the module within any of various interior mirrors having various sizes, shapes and configurations. The selection of Class 3 has the biggest merits in terms of reducing the cost of the repeater station, of making the repeater station into a small size, and of reducing the power consumption.

Also, since the interior mirror is positioned at a substantially center portion of the cabin, which is a portion where almost all of the cabin can be looked over, the sending/receiving antenna for Bluetooth to be accommodated within the interior mirror may be made into a small size.

The devices making up the network within the automobile can constitute a network with a weak electric wave. Consequently, with regard to various electronic apparatuses provided within the automobile (such as automobile telephone, car navigation system, VICS, and ITS) , electronic apparatuses carried on the automobile (such as cellular phone, personal computer, mobile computer, PDA (personal digital accessory) , mobile electronic apparatuses, mobile communication devices, digital cameras, printers, display devices, game devices, portable audio devices, and various digital devices) (hereinafter totally referred -to as "prescribed electronic apparatuses") , even if each of them has a module for transmitting and receiving Bluetooth, the size of each prescribed electronic apparatus is not increased. Particularly, as for various electronic apparatuses provided on the automobile, if their sizes are increased in comparison with the present situation by possessing a module for transmitting and receiving Bluetooth, it becomes the trouble for putting it into a practical use and, thus, this is important. Of course, since the network within the automobile through Bluetooth can easily be constructed with a weak electric wave, this contributes to the reduced power consumption.

Since the interior mirror is positioned at a substantially center portion of the cabin, when the module for transmitting and receiving Bluetooth is provided on the prescribed electronic apparatus, the freedom for setting the prescribed electronic apparatus is increased, the freedom for the position of the module for transmitting and receiving Bluetooth provided on the prescribed electronic apparatus is increased and Bluetooth sending/receiving antenna accommodated within the prescribed electronic apparatus may be small.

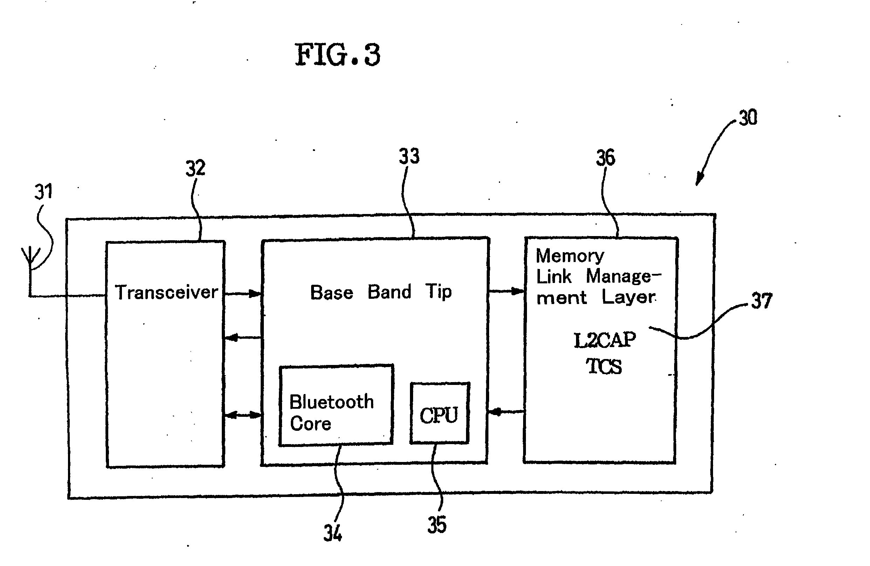

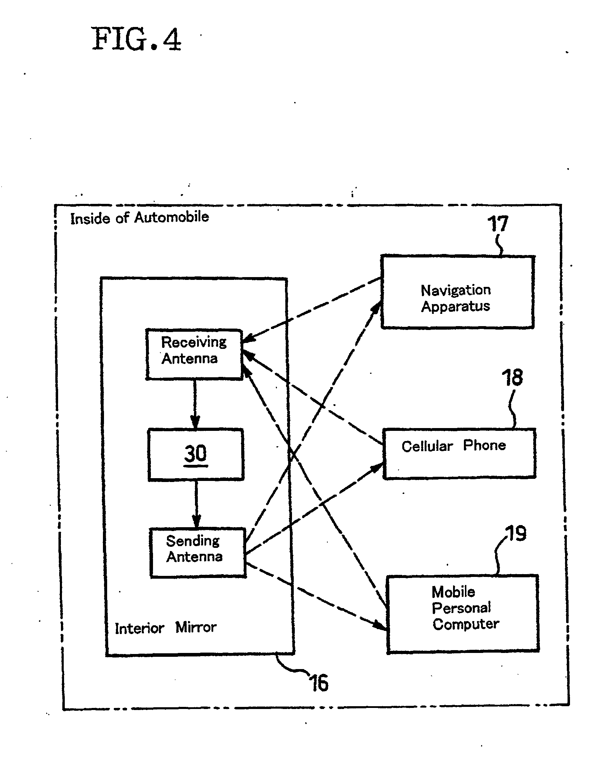

FIG. 3 is a block diagram showing an inner configuration of the wireless communication repeater station accommodated within an interior mirror according to this embodiment, and FIG. 4 is a drawing showing the transferring of data when wireless communication is performed using the interior mirror according to this embodiment. In Bluetooth terminal 30 specialized for a wireless communication repeater station shown in FIG. 3, transceiver 32 performs a treatment where a wireless signal is received according to a prescribed communication frequency, after which the signal is demodulated into a base band signal, a treatment where the base band signal is modulated to a wireless signal according to the defined communication frequency, which is then transmitted as the wireless signal, and other treatment. Also, in base band tip 33, various digital signal treatments mainly required in the base band signal are carried out. For example, in base band tip 33 (Bluetooth core 34) error checking and correction of data, encryption of data, interleaving and any other data'manipulations are performed, and the manipulated data finally is radiated from antenna 31 as a wireless signal, which is an analog data. Conversely, the wireless signal received from antenna 31 is sampled to carry out the reverse treatments of the digital base band signal such as error checking and correction of data, encryption of data, interleaving and any other data manipulations. Within base band tip 33, host CPU for system processing of Bluetooth and for controlling link management layer 37 within memory 36 is included.

In Embodiment 2, for example, software for realizing the relay of the wireless communication is stored in CPU 35 or memory 36 within base band tip 33 and is used to realize one-to-many communication, for example, Bluetooth terminal specialized for a wireless communication repeater station becoming a Bluetooth terminal (master) having control functions, which controls any other Bluetooth terminals (slaves).

It is noted that as Bluetooth module, functional roles loaded on the transceiver and the base band tip may be distributed as long as each of functions as Bluetooth are packed. For example, timing extraction or such, which is one of the processing in the base band tip may be performed by the transceiver.

Next, referring to FIG. 4, the operation of the wireless communication utilizing this interior mirror 16 will be briefly described. The arrow shown as a broken line represents a weak electric wave. The apparatuses forming the network within the automobile can be made up a network using weak electric waves both for the transmission and receiving in a stable manner. Specifically, both of the electric waves, which are transmitted from any of the prescribed electronic apparatuses within the automobile and received by Bluetooth terminal 30 specialized for a wireless communication repeater station and those which are transmitted from Bluetooth terminal 30 specialized for a wireless communication repeater station and received by any of the prescribed electronic apparatuses within the automobile may be weak electric waves. This is because this is the wireless. communication repeater station specially intended for the communication within the automobile, there is no need for transmitting any strong electric wave to the outside of the automobile, and, for example, the weakest electric wave such as Class 3 can be used to constitute the network within the automobile.

It is, of course, possible in Embodiment 2 that a wireless signal other than Bluetooth is transmitted to or received from the outside of the automobile via a sending/receiving antenna possessed by any of the prescribed electronic apparatuses, and then the signal is relayed by the repeater station accommodated within the interior mirror of Embodiment 2 via a Bluetooth interface possessed by the prescribed electronic apparatus, to thereby constitute the network between the inside and outside of the automobile.

In Embodiment 2, the case is exemplified where the wireless communication repeater station specially intended for the network is accommodated within the automobile, but it is noted that Bluetooth communication with the outside of the automobile can be performed if the distance is short, e.g., within approximately 5 m.

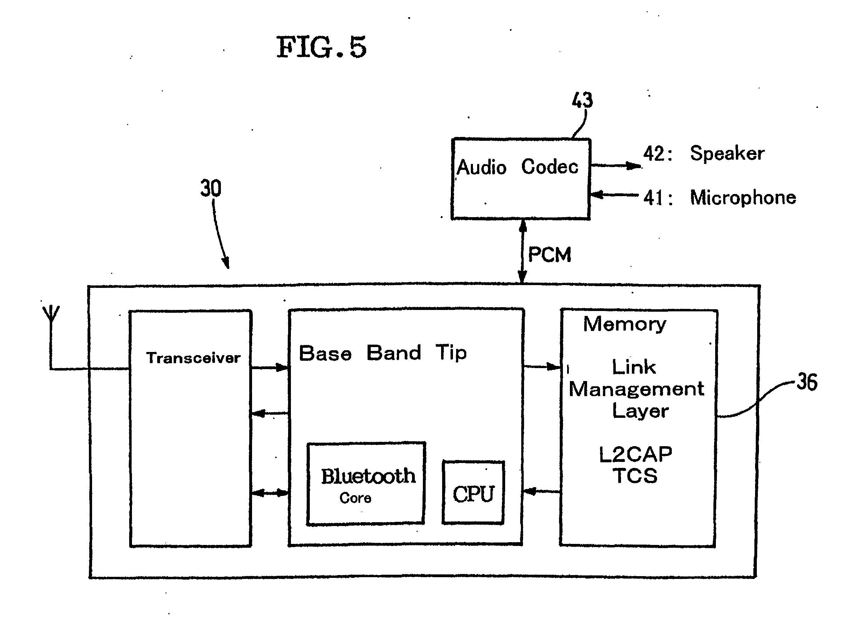

In Embodiment 2, a hands-free telephone function can easily be provided. For example, as shown in FIG. 5, if an application for a handset and a host layer as software are directly installed in memory area 36 of Bluetooth terminal 30, and microphone 41, speaker 42, audio codec for digitalizing and compressing an audio signal as hardware and the like are provided, a hands-free telephone function can easily be realized.

In Embodiments 1 and 2 described above, in order to carry the electric wave over the entire area of the inside of the automobile, a non-directional antenna such as collinear antenna is preferably used as the antenna. Also, a diversity antenna system having two antennas and selecting one under better conditions is preferably used. As for the S/R antenna, one antenna can be commonly used. It is possible for the antenna to provide on or near the external surface of the mirror body. These facts are applicable to the following embodiments.

In Embodiments 1 and 2 described above, if a solar battery is provided on a portion that gets a lot of sun such as the back surface of interior mirror and if a power source is secured in combination with a chargeable battery, the exchange of the battery and securing of the battery from the outside of the mirror are not required. This is applicable to the following embodiments.

In Embodiments 1 and 2 described above, instead of Bluetooth, a short distance wireless communication technique other than Bluetooth can be used, but at present, various and big merits can be obtained in using Bluetooth. This is because there is a large possibility to use Bluetooth in the communication within the automobile, and there is also a possibility to use Bluetooth in the communication outside of the automobile.

### Embodiment 3

Embodiment 3 concerns an embodiment where Bluetooth signals are used in all of the communication within the automobile and the communication between inside and outside of the automobile and where the communication with the outside of the automobile is performed via an antenna set within or on an exterior mirror.

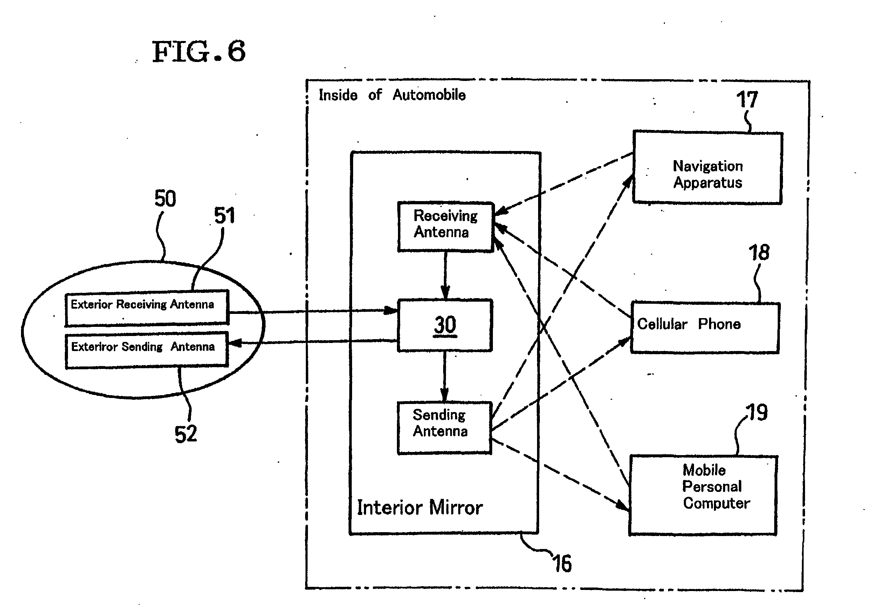

For example, as shown in FIG. 6, exterior sending and receiving antennas 51 and 52 suitable for Bluetooth communication with the outside of the automobile are provided on exterior mirror 50, and these exterior sending and receiving antennas are connected via wires to Bluetooth terminal 30 specialized for a wireless communication repeater station, which is the same as that of Embodiment 2. The Bluetooth wave signal sent from the outside of the automobile is set so as to be received by the exterior receiving antenna 51 and the Bluetooth wave signal transmitted to the outside of the automobile is set so as to be transmitted by exterior sending antenna 52. Specifically, for example, since the existing PICONET has been formed within the automobile and Bluetooth terminal 30 specialized for a wireless communication repeater station can identify the network to the outside of the automobile, in such a case, Bluetooth signal is set so as to be received by exterior receiving antenna 51. Similarly, the connection with the outside of the automobile can be identified not to be the existing PICONET within the automobile, in such a case, the Bluetooth signal is set so as to be received by exterior receiving antenna 51.

Since the exterior mirror is projected from the automobile, it is optimum to be used in the communication with the outside of the automobile.

In Bluetooth terminal 30 used in Embodiment 3 specialized for a wireless communication repeater station, which is the same as that of Embodiment 2, it is possible to automatically control the electric wave transmitted to the electronic apparatuses within the automobile so as to be weak as is described in Embodiment 1. Also, the function for controlling the transmission power make it possible to automatically transmit a strong electric wave to the electronic apparatus etc. outside of the automobile.

In Embodiment 3 , both of the merits of the interior mirror and the merits of the exterior mirror can be exhibited.

### Embodiment 4

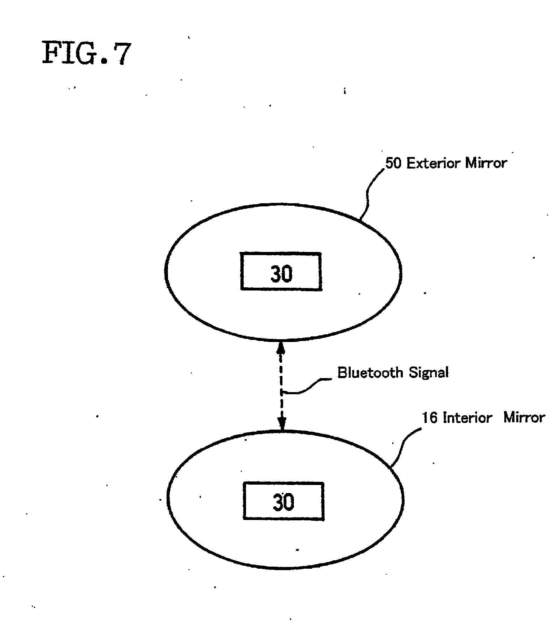

Embodiment 4 is an embodiment where Bluetooth terminals 30 specialized for a wireless communication repeater station, which are the same as that of Embodiment 2, are accommodated within both of interior mirror 16 and exterior mirror 50, and they are connected in Bluetooth wireless communication as shown in FIG. 7. In this embodiment, both of the merits of the interior mirror and the merits of the exterior mirror can be exhibited.

In Embodiment 4, for example, Bluetooth terminal 30 specialized for a wireless communication repeater station accommodated within interior mirror 16 can constitute the network within the automobile in a good manner using weak electric waves both for the transmission and receiving. In addition, Bluetooth terminal 30 specialized for a wireless communication repeater station accommodated within exterior mirror 50 makes it possible to transmit a strong electric wave to the electronic apparatuses etc. outside of the automobile and to receive a weak electric wave outside of the automobile. In this case, Bluetooth terminal 30 specialized for a wireless communication repeater station accommodated within exterior mirror 50 can possess functions for sending and receiving wireless signals other than Bluetooth as described in the following Embodiment 5.

### Embodiment 5

Embodiment 5 is an embodiment where one Bluetooth terminal is accommodated within an exterior mirror, which has at least one functions amongst a function for receiving a wireless signal other than Bluetooth from the outside of the automobile, and converting it into a Bluetooth signal to transmit it to the inside of the automobile; a function for a wireless signal other than Bluetooth from the inside of the automobile, and converting it into a Bluetooth signal to transmit it to the outside of the automobile; a function for receiving Bluetooth signal from the inside or outside of the automobile, and transmitting it to the outside or inside of the automobile; a function for receiving a wireless signal other than Bluetooth signal from the inside or outside of the automobile, and transmitting it to the outside or inside of the automobile; and a function for optionally amplifying the signal in these functions.

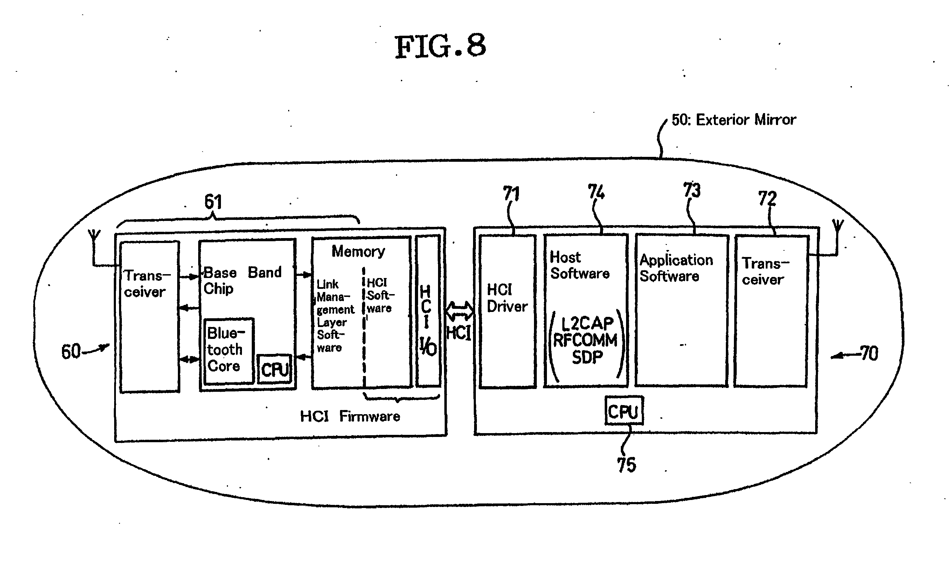

These functions can be realized, for example, in the configuration shown in FIG. 8. In FIG. 8, numeral 50 is an exterior mirror, numeral 60 is a generic Bluetooth module packed in the prescribed electronic apparatus terminals (module for 2 CPU solution), the portion of numeral 61 is similar to that described in Embodiment 2, and numeral 70 is of a function for sending and receiving a wireless signal other than Bluetooth and communicating the signal with Bluetooth module 60. HCL (Host Control Interface) is an interface for connecting Bluetooth, and can be externally operated by HCL driver 71. Numeral 72 is a transceiver for sending and receiving a wireless signal other than Bluetooth, numeral 73 is communication application thereof or such, numeral 74 is host software including a Bluetooth host, which manages a host layer protocol of Bluetooth (wireless link) and application host, and numeral 75 is CPU which manages 71-74.

In FIG. 8, the function for receiving a wireless signal other than Bluetooth from the outside of the automobile, and converting it into a Bluetooth signal to send it to the inside of the automobile, and the function for receiving a wireless signal other than Bluetooth from the inside of the automobile, converting it into a Bluetooth signal to send it to the outside of the automobile can be exhibited by the combination of portion 60 with portion 70 shown in FIG. 8. The function for receiving Bluetooth signal from the inside or outside of the automobile, and transmitting it to the outside or inside of the automobile can be exhibited only by portion 60 (or portion 61) shown in FIG. 8. Furthermore, the function for receiving a wireless signal other than Bluetooth signal from the inside or outside of the automobile, and transmitting it to the outside or inside of the automobile can be exhibited by only by transceiver 72, which sends and receives a wireless signal other than Bluetooth, shown in FIG. 8.

In Embodiment 5, for example, when communication application for sending and receiving a wireless signal other than Bluetooth and a host layer protocol are directly installed as software in memory area 36 in Bluetooth module (module for 1 CPU solution) used in Bluetooth terminal 30 specialized for a wireless communication repeater station, and when a transceiver (not shown in FIG. 3) or such, which sends and receives a wireless signal other than Bluetooth is built in as hardware, the functions similar to that described in FIG. 8 previously can be exhibited.

In Embodiment 5, for example, the Bluetooth terminal specialized for a wireless communication repeater station within the exterior mirror (including exterior sending and receiving antennas) can be connected via wire to the Bluetooth terminal specialized for a wireless communication repeater station accommodated within the interior mirror to perform the communication within the automobile.

As in Embodiment 5, when an exterior mirror with a built-in antenna, which receives a wireless signal other than Bluetooth and/or sends a wireless signal other than Bluetooth, is used, sending and receiving antennas for communication with the outside of the automobile provided on various electronic apparatuses (such as automobile telephone, car navigation system, VICS, and ITS) can be omitted. Also, with regard to the wireless signal other than Bluetooth, it can be used for the communication with the outside of the automobile in a good manner.

As a power source for the Bluetooth terminal specialized for a wireless communication repeater station, power supply wiring for electrically operated mirror, i.e., onboard buttery power source, and the wiring thereof can be advantageously used. This is also advantageous in the case of a large power consumption (for example, the case where the communication is performed at Bluetooth Class 1 or Class 2 or the communication is performed with a wireless signal other than Bluetooth).

Embodiment 5 can be modified to an embodiment where part 60 and part 70 are accommodated within the interior mirror. Also, Embodiment 5 can be modified by selecting a part of the configurations in Embodiments 3 and 4.

Moreover, in the present invention, modified embodiments can be made by selecting parts of the configurations in Embodiments 1 to 5 and combining these parts.

## Claims

1. An automobile mirror device having a repeater station accommodated therein comprising:
a wireless communication repeater station, which has a function of relaying a wave signal to be transmitted from inside or outside of the automobile to the inside or outside of the automobile, accommodated within a mirror device provided on the automobile.

2. The automobile mirror device having a repeater station accommodated therein according to Claim 1, wherein a wireless communication repeater station at least comprising a receiver which receives a wave signal transmitted from the inside or outside of the automobile, an amplifier, which amplifies the wave signal received from the receiver as occasion demands, and a transmission portion, which transmits the signal amplified by the amplifier is accommodated within an interior of a mirror device provided on the automobile.

3. The automobile mirror device having a repeater station accommodated therein according to Claim 1 or 2, wherein said repeater station is a part of the network within the automobile, which connects electronic apparatuses within the automobile.

4. The automobile mirror device having a repeater station accommodated therein according to any one of Claims 1 to 3 , wherein said wireless communication repeater station has a function of connecting the networks inside and outside of the automobile with each other.

5. The automobile mirror device having a repeater station accommodated therein according to any one of Claims 1 to 4, wherein said wireless communication repeater station is provided within an exterior mirror.

6. The automobile mirror device having a repeater station accommodated therein according to any one of Claims 1 to 4, wherein said wireless communication repeater station is provided within an interior mirror.

7. The automobile mirror device having a repeater station accommodated therein according to any one of Claims 1 to 6, wherein said electric wave is a signal defined by short distance commemoration standard, and the mirror device is one terminal for the network formed by the short distance commemoration standard.

8. The automobile mirror device having a repeater station accommodated therein according to Claim 7 , wherein said electric wave signal is Bluetooth signal, and the mirror device is a Bluetooth terminal, which is operated according to Bluetooth communication standard.

9. The automobile mirror device having a repeater station accommodated therein according to Claim 7 or 8 , wherein said wireless communication repeater station comprises a wireless communication repeater station intended to specially utilizing the relaying within the automobile.

10. The automobile mirror device having a repeater station accommodated therein according to Claim 8 or 9 , wherein said wireless communication repeater station comprises a wireless communication repeater station specialized for relaying a Bluetooth signal.

11. The automobile mirror device having a repeater station accommodated therein according to Claim 10, wherein said wireless communication repeater station has functions as a Bluetooth terminal operated according to Bluetooth communication standard, and said wireless communication repeater station becomes a Bluetooth terminal (Master) having control functions for realizing one-to-many connection, while controlling any other Bluetooth terminals (Slaves).

12. The automobile mirror device having a repeater station accommodated therein according to Claim 11, wherein said wireless communication repeater station comprises a transceiver and a base tip set and accompanying software and memory, or a Bluetooth system module in which they are one-tipped -, and by storing a software for realizing the relaying of the wireless communication in CPU or memory in the base tip set.

13. The automobile mirror device having a repeater station accommodated therein according to Claim 11, wherein said wireless communication repeater station only has a function as a repeater station that it receives a Bluetooth signal, and optionally amplifies it, and transmits it as a Bluetooth signal.

14. The automobile mirror device having a repeater station accommodated therein according to Claim 8 , wherein said wireless communication repeater station is a wireless communication repeater station utilizing a Bluetooth signal all in the communication within the automobile and the communication between the inside and the outside of the automobile.

15. A automobile mirror device having a repeater station accommodated therein, wherein the wireless communication repeater station according to Claim 11 or 12 is accommodated within an interior mirror, an exterior sending and receiving antenna suitable for Bluetooth communication with the outside of the automobile is provided within or on said exterior mirror, and these exterior sending and receiving antenna is connected via wires to said communication repeater station, and the communication with the outside of the automobile is performed by said exterior sending and receiving antenna provided within or on said exterior mirror.

16. A automobile mirror device having a repeater station accommodated therein, wherein the wireless communication repeater station according to Claim 11 or 12 is each accommodated within each of an interior mirror and an exterior mirror, and they are connected via Bluetooth wireless communication or a wire.

17. The automobile mirror device having a repeater station accommodated therein according to Claim 8 , wherein said wireless communication repeater station has a least one functions among a function for receiving a wireless signal other than Bluetooth from the outside of the automobile, and converting it into a Bluetooth signal to transmit it to the inside of the automobile; a function for a wireless signal other than Bluetooth from the inside of the automobile, and converting it into a Bluetooth signal to transmit it to the outside of the automobile; a function for receiving Bluetooth signal from the inside or outside of the automobile, and transmitting it to the outside or inside of the automobile; a function for receiving a wireless signal other than Bluetooth signal from the inside or outside of the automobile, and transmitting it to the outside or inside of the automobile; and a function for optionally amplifying the signal in these functions.

18. The automobile mirror device having a repeater station accommodated therein according to Claim 17, wherein said wireless communication repeater station is composed of a Bluetooth module (module for 2 CPU solution).

19. The automobile mirror device having a repeater station accommodated therein according to any one of Claims 1 to 18, wherein said wireless communication repeater station has a function of hands-free telephone.
